**(19)** Europäisches Patentamt

European Patent Office

Office européen des brevets

**(11)** **EP 0 847 518 B1**

**(12)** **EUROPÄISCHE PATENTSCHRIFT**

**(45)** Veröffentlichungstag und Bekanntmachung des Hinweises auf die Patenterteilung:
**05.06.2002 Patentblatt 2002/23**

**(51)** Int Cl.$^7$: **G01C 17/38**

**(21)** Anmeldenummer: **96930068.0**

**(86)** Internationale Anmeldenummer:
**PCT/EP96/03681**

**(22)** Anmeldetag: **21.08.1996**

**(87)** Internationale Veröffentlichungsnummer:
**WO 97/08513 (06.03.1997 Gazette 1997/11)**

**(54) VERFAHREN ZUR HORIZONTSTABILISIERUNG VON MAGNETKOMPASSEN**

METHOD OF STABILIZING THE HORIZON OF MAGNETIC COMPASSES

PROCEDE DE STABILISATION DE L'HORIZON DE COMPAS MAGNETIQUES

**(84)** Benannte Vertragsstaaten:
**AT CH DE FI FR GB IT LI NL SE**

**(30)** Priorität: **31.08.1995 DE 19532122**

**(43)** Veröffentlichungstag der Anmeldung:
**17.06.1998 Patentblatt 1998/25**

**(73)** Patentinhaber: **Leica Geosystems AG**
**9435 Heerbrugg (CH)**

**(72)** Erfinder:
- **DITTRICH, Frank**
  **CH-9445 Rebstein (CH)**
- **NACHBAUR, Peter**
  **A-6807 Feldkirch (AT)**
- **GNEPF, Silvio**
  **CH-9435 Heerbrugg (CH)**

**(74)** Vertreter: **Stamer, Harald, Dipl,-Phys.**
**Postfach 26 04**
**35536 Wetzlar (DE)**

**(56)** Entgegenhaltungen:
**US-A- 3 899 834          US-A- 5 287 628**

EP 0 847 518 B1

**Beschreibung**

Die Erfindung betrifft ein Verfahren zur Horizontstabilisierung von Magnetkompassen.

Die üblichen Kompasse mit Magnetnadel besitzen keine Horizontstabilisierung, sondern es wird gegebenenfalls eine Nivellierung über z.B. eine Flüssigkeitslagerung vorgenommen. Gleiches würde eine kardanische Aufhängung liefern.

Es sind verschiedene Methoden bekannt, um bei Magnetkompassen eine Stabilisierung des Horizontes zu erreichen. Beispielsweise wird bei Navigationssystemen eine Stabilisierung des Horizonts mittels Kreiselvorrichtungen erreicht. Dies ist eine komplizierte und aufwendige Maßnahme.

Beim Fehlen einer Stabilisierung des Horizonts entsteht zumeist durch Beschleunigungen ein Meßfehler oder Ablesefehler, wenn derartige Magnetkompasse im mobilen Einsatz verwendet werden, beispielsweise während der Fahrt in einem Fahrzeug. Die gleichen Fehler können auch auftreten, wenn der Kompass nur von Hand gehalten wird.

Bei einem aus DE 37 16 985 C1 bekannten digitalen Magnetkompaß (DMC) wird die Richtungsinformation aus der Projektion des Erdmagnetfeldvektors auf die Horizontebene erhalten. Der DMC enthält für jede Koordinate des Erdmagnetfeldes einen separaten Sensor. Die Horizontebene wird mit Hilfe von zwei senkrecht zueinander angeordneten Neigungssensoren gemessen. Die Neigungssensoren sind mit den Magnetfeldsensoren in einem gemeinsamen Gehäuse angeordnet.

Die Neigungssensoren sind in Wirklichkeit Beschleunigungssensoren. Sie werden in dem Gehäuse so kalibriert, daß sie im Ruhezustand, d.h. ohne zusätzlich einwirkende Beschleunigungskräfte, nur die Komponenten des Erdbeschleunigungsvektors in X- und Y-Richtung des DMC-Koordinatensystems messen und daraus die Winkel zwischen den beiden genannten Koordinatenachsen und der Horizontebene bestimmen. Die Projektion des Erdmagnetfeldvektors wird entsprechend der aktuellen, von der horizontierten Bezugslage abweichenden Lage des DMC-Gehäuses korrigiert.

Das Koordinatensystem des DMC sei ein rechtwinkliges, rechtshändiges, kartesisches Koordinatensystem mit dem Ursprung 0 und den drei Koordinatenachsen X, Y, Z. Dieses Koordinatensystem wird als mit dem DMC Gehäuse verbunden angesehen.

Die X-Achse und die Y-Achse definieren eine erste Ebene, die der Horizontebene oder Bezugsebene bei horizontaler Ausrichtung des DMC-Gehäuses entspricht Die Sichtlinie des DMC fällt mit der X-Achse zusammen. Die Z-Achse ist dann parallel zum Erdbeschleunigungsvektor.

Wird das DMC-Gehäuse geneigt, so soll eine Drehung des DMC-Koordinatensystems gegenüber einem raumfesten Bezugssystem erfolgen, das ebenfalls ein rechtwinkliges, rechtshändiges, kartesisches Koordinatensystem mit dem Ursprung 0, aber nun mit den drei Koordinatenachsen X', Y, Z' ist. Im horizontierten Zustand fallen die jeweils entsprechenden Koordinatenachsen und der Ursprung der beiden Koordinatensysteme zusammen.

Die Bezugsebene des DMC würde nach einer Drehung in einer zweiten Ebene liegen, die beispielsweise durch eine Drehung mit dem Winkel $\alpha$ um die Y'-Achse und durch eine Drehung mit dem Winkel $\beta$ um die X'-Achse erhalten wird. Der Winkel $\alpha$ wird auf dem Gebiet der Navigation als Nickwinkel und der Winkel $\beta$ als Rollwinkel bezeichnet.

Das XYZ-Koordinatensystem des DMC läßt sich also allein durch eine Drehung in das raumfeste X'Y'Z'-Koordinatensystem überführen. Der Nickwinkel $\alpha$ und der Rollwinkel $\beta$ werden als Meßwerte der Neigungssensoren erhalten.

Da die Erdbeschleunigung über die Erdoberfläche nur wenig variiert, stimmen die im statischen oder gleichförmig bewegten Zustand des DMC bestimmten Neigungswinkel überall mit der tatsächlichen Lage gegenüber dem Erdbeschleunigungsvektor überein.

Anders verhält es sich jedoch, wenn der DMC in ein Fahrzeug oder ein Gerät eingebaut ist, das gebremst, beschleunigt und auf Kurvenbahnen bewegt wird, so daß Radialbeschleunigungen und Zentrifugalbeschleunigungen auftreten.

Wie bereits erwähnt wurde, handelt es sich bei den Neigungssensoren eigentlich um Beschleunigungssensoren. Diese enthalten eine Membrane, die unter dem Einfluß von Beschleunigungskräften ausgelenkt wird. Die Auslenkung wird als Änderung der Kapazität eines Kondensators gemessen. Die in einem Fahrzeug gemessenen Auslenkungen der beiden Neigungssensor-Membranen stellen daher immer eine Überlagerung der Neigung des DMC gegenüber dem Erdbeschleunigungsvektor und der bewegungsbedingten Beschleunigungen des DMC dar.

Unter der Annahme, daß die in Fahrtrichtung weisende Fahrzeugachse mit der X-Achse übereinstimmt, führen beschleunigte Bewegungen auf waagerechtem Untergrund zur Anzeige eines Nickwinkels $\alpha$ und täuschen daher eine Neigung der Horizontebene vor. Eine Kurvenfahrt führt unter denselben Voraussetzungen im wesentlichen zu einer Auslenkung der Rollwinkel-Sensor-Membran und täuscht daher einen Rollwinkel $\beta$ vor. Schleuderbewegungen, Kurvenlage, Querdriften usw. führen ebenfalls zur Anzeige tatsächlich nicht vorhandener Neigungen der DMC-Ebene gegenüber der Horizontebene und daher zu einer Projektion des Erdmagnetfeldvektors auf eine verfälschte Horizontebene.

Die Magnetfeldsensoren werden durch Beschleunigungen nicht beeinflußt. Durch eine Drehung des DMC-Koordinatensystems XYZ gegenüber dem horizontierten raumfesten Koordinatensystem X'Y'Z' verändert sich aber aus geometrischen Gründen der Magnetfeldvektor. Die zeitliche Änderung des Magnetfeldvektors ist dabei dem Kreuzprodukt aus dem Magnetfeldvektor und dem Drehratenvektor zwischen den Koordinatensystemen proportional. Die Komponenten des Drehratenvektors sind die Drehwinkeländerungen der Koordinatenachsen X, Y, Z pro Sekunde gegenüber den horizontierten Koordinatenachsen X', Y', Z'. Der Drehratenvektor läßt sich aus den Magnetfeldkomponenten allein nicht vollständig bestimmen, da z.B. eine Drehung genau um die Magnetfeldrichtung alle drei Magnetfeldkomponenten unverändert läßt, so daß die Komponente des Drehratenvektors parallel zum Magnetfeld nicht bestimmt werden kann. Der Neigungssensor mißt zwar direkt die Drehrate, diese ist aber aus den vorgenannten Gründen bei beschleunigten Bewegungen fehlerbehaftet. Eine vorhandene Drehrate beeinflußt daher zum einen die Messung des Magnetfeldvektors und zum anderen die Bestimmung der korrekten Horizontebene.

Aus DE 34 22 490 C2 ist ein Verfahren zur Korrektur eines Winkelfehlers bei der Ermittlung der Fahrtrichtung eines Fahrzeugs bekannt. Zur Ermittlung eines Korrekturwertes werden mit zwei Magnetfeldsensoren die Komponenten $H_X$ und $H_Y$ des Magnetfeldes in der Fahrzeugebene gemessen. Eine Neigungswinkelmeßeinrichtung bestimmt in Richtung der Fahrzeuglängsachse den Inklinationswinkel. Beschleunigungseffekte auf den Neigungswinkel werden dabei durch Bestimmung der ersten Ableitung der Fahrzeuggeschwindigkeit berücksichtigt. Die Korrektur der Fahrtrichtung berücksichtigt nur den durch einen Neigungswinkel des Fahrzeugs in dessen Längsrichtung bezüglich der Horizontalen hervorgerufenen Fehler.

Aus US 5 287 628 A und US 5 444 916 A sind Vorrichtungen mit jeweils drei zueinander orthogonal stehenden Magnetfeldsensoren und Neigungssensoren bekannt, mit denen elektronisch eine Horizontalebene erzeugt werden kann. Bezüglich dieser Horizontalebene wird die Neigung eines Fahrzeugs bestimmt. Beschleunigungseffekte werden nicht berücksichtigt.

Aus EP 0 668 485 A1 ist ein Verfahren zur Rekonstruktion des mit einem Magnetfeldsensor gemessenen Gierwinkels eines Fahrzeugs aus fehlerbehafteten Rohdaten bekannt. Zur Berechnung werden eine Bewertungsfunktion, ein Iterativverfahren, eine wählbare Zugehörigkeitsfunktion und aufgrund einer Plausibilitätsbetrachtung festgelegte Werte verwendet. Das Verfahren geht von der Voraussetzung aus, daß sich richtungsabhängige Störeinflüsse bei der Messung des Gierwinkels durch Meßdaten anderer Sensoren zwar erkennen lassen, durch Kombination mit diesen aber nicht kompensieren lassen.

Der Erfindung liegt daher die Aufgabe zugrunde, ein Verfahren zur Horizontstabilisierung von digitalen Magnetkompassen anzugeben, bei dem der Einfluß beschleunigungsabhängiger Anteile bei der Drehratenmessung minimiert wird.

Diese Aufgabe wird durch die in den Ansprüchen 1 und 2 angegebenen Merkmale gelöst.

Der Erfindung liegt die Idee zugrunde, aufgrund einer Schätzung der Drehratenvektoren bei einer Änderung von Nick- und Rollwinkel ein Kriterium dafür anzugeben, ob diese Änderung aufgrund der gemessenen, rein geometrischen Drehungen des Magnetfeldvektors angemessen ist oder nicht. Bei vollständiger Kenntnis des Drehratenvektors würden somit im Idealfall nur Veränderungen des Bezugssystems zugelassen, d.h. bei der Projektion des Magnetfeldvektors berücksichtigt, welche dem bekannten Drehratenvektor entsprechen. Alle beschleunigungsabhängigen Anteile werden ausgefiltert.

Der Erfindungsgegenstand wird im folgenden anhand eines Ausführungsbeispiels mit den erfindungsgemäßen Verfahrensschritten näher erläutert.

Schritt a)

Es werden zu Zeiten $t_{j-1}$ und $t_j$ mit j = 1, 2, ... n die Komponenten $H_X$, $H_Y$ und $H_Z$ des Feldvektors **H** des Erdmagnetfeldes im XYZ-Koordinatensystem gemessen.

Es werden ebenfalls zu den Zeiten $t_{j-1}$ und $t_j$ die Komponenten $g_x$ und $g_y$ des Vektors $\mathbf{g}_{GES}$ der Gesamtbeschleunigung gemessen, der sich aus dem Erdbeschleunigungsvektor $\mathbf{g}_{ERD}$ und dem Fahrzeug/Kompassbeschleunigungsvektor a zusammensetzt, nämlich $\mathbf{g}_{GES} = \mathbf{g}_{ERD} - \mathbf{a}$. Der Erdbeschleunigungsvektor geht von dem Ursprung des XYZ-Koordinatensystems aus. Wenn der Magnetkompaß horizontal ausgerichtet ist, so fallen der Erdbeschleunigungsvektor, der in Richtung zum Erdmittelpunkt weist, und die Z-Achse zusammen.

Vorteilhafter Weise verwendet man den auf 1 normierten Gesamtbeschleunigungsvektor $\mathbf{g} = (g_X, g_Y, g_Z) = \mathbf{g}_{GES}/|\mathbf{g}_{GES}|$ mit $|\mathbf{g}_{GES}| = (g^2_{GES\,X} + g^2_{GES\,Y} + g^2_{GES\,Z})^{1/2}$.

Da sich, wenn der Magnetkompaß in einem Fahrzeug untergebracht ist, das Fahrzeug im allgemeinen während der Messungen bewegt, erfolgen die Messungen zu den Zeitpunkten $t_{j-1}$ und $t_j$ an örtlich unterschiedlichen Meßpunkten. Es kann jedoch das ungestörte, d.h. nicht durch z.B. große Eisenmassen, wie Brücken, beeinflußte, Erdmagnetfeld auf den Strecken als homogen angesehen werden, die von einem landgebundenen Fahrzeug zwischen zwei Messungen zurückgelegt werden. Treten jedoch Störungen auf, so wird bevorzugt, entsprechende Maßnahmen zu ergreifen (vgl. die nicht vorveröffentlichte DE 44 39 945 C1).

Von dem Erdbeschleunigungsvektor g lassen sich Informationen über die Lage der Bezugsebene des Kompasses bzw. deren Änderung ableiten.

Schritt b)

Es werden die zeitlichen Änderungen der Komponenten $g_X$ und $g_Y$ des Gesamtbeschleunigungsvektors $\mathbf{g}_{GES}$ bestimmt. Ein großer Wert bei einer zeitlichen Änderung einer Komponente des Gesamtbeschleunigungsvektors $\mathbf{g}_{GES}$ würde im Falle eines sich in einem Fahrzeug befindenden Magnetkompasses auf eine plötzliche Geschwindigkeitsänderung des Fahrzeugs in Richtung dieser Komponente hinweisen, wie sie z.B. bei einem starken Bremsvorgang auftreten kann.

Schritt c)

Es wird die Ableitung des Magnetfeldvektors **H** nach der Zeit, d.h. es wird die zeitliche Änderung der Komponenten $H_X$, $H_Y$, $H_Z$ des Magnetfeldvektors **H** und seines Absolutwertes |**H**| bestimmt. Eine große Änderung des Wertes einer Magnetfeldvektorkomponente würde auf eine plötzliche Richtungsänderung der Ausrichtung des Magnetkompasses bzw. des Fahrzeuges hinweisen.

Da sich, wie oben beim Schritt a) bereits erwähnt, im allgemeinen das Fahrzeug bewegt, erfolgt die Ableitung nicht an demselben Meßpunkt, und es wird hier ebenfalls von einer Homogenität des Erdmagnetfelds zwischen den Meßpunkten ausgegangen.

Die Schritte b) und c) können auch gleichzeitig ausgeführt werden.

Schritt d)

Aus den bei den Schritten a), b) und c) berechneten Größen lassen sich die Drehratenkomponenten des Vektorfeldes bestimmen, durch die an einen bestimmten Punkt die Beziehung zwischen der Raumlage des horizontal ausgerichteten Magnetkompasses und dem gegenwärtig gekippten Magnetkompaß definiert ist.

Im Prinzip sind diese Drehratenkomponenten die sin- und cos-Größen der Winkel, die die Lagebeziehung zwischen den Koordinatenachsen der zwei gegeneinander gedrehten, kartesischen Koordinatensysteme mit gemeinsamem Ursprung bestimmen.

Schritt e)

Aus der Y-Meridian-Komponente der berechneten Drehratenkomponenten wird ein Nickterm bestimmt. Die Y-Meridian-Komponente verläuft parallel zu der Sichtlinie des Magnetkompasses.

Schritt f)

Aus der X-Meridian-Komponente der berechneten Drehratenkomponenten wird ein Rollterm bestimmt. Die X-Meridian-Komponente verläuft senkrecht zu der Sichtlinie des Magnetkompasses.

Schritt g)

Unter der Annahme, daß die Drehungen vorwiegend einzeln um die Achsen Y (Nickwinkel-Änderung) und X (Rollwinkel-Änderung) stattfinden, wird eine angenäherte Gütefunktion für die Änderung des Horizonts bestimmt. Dabei wird eine erste Gütefunktion für den gemessenen Horizont auf der Grundlage der im Schritt c) bestimmten Größen aufgestellt, d.h. aus der zeilichen Änderung des Magnetfeldvektors **H**, und es wird eine zweite Gütefunktion für den zu ermittelnden, stabilisierten Horizont auf der Grundlage der im Schritt e) und f) bestimmten Größen aufgestellt.

Schritt h)

Auf der Grundlage der ersten und der zweiten Gütefunktion wird ein Schätzverfahren vorgenommen, durch das das Zutreffen des tatsächlichen (d.h. des zu ermittelnden, stabilisierten) Horizonts des Systems beurteilt wird.

Schritt i)

Mit Hilfe des Schätzverfahrens werden die gemessenen und/oder geschätzten Komponenten des Gesamtbeschleunigungsvektors gewichtet. Dieses führt zum Erzeugen eines stabilisierten Horizonts, der weitgehend unanfällig gegen bewegungsbedingte Beschleunigungen ist, aber dennoch empfindlich auf Lageänderungen des Systems reagiert.

Im folgenden wird eine beispielhafte Durchführung des Verfahrens mit Angabe der mathematischen Zusammenhänge gegeben.

a) Zu diskreten Zeitpunkten $t_j$, j = 1,2, ..., n werden die Komponenten des Erdmagnetfeldvektors **H** und die Komponenten $g_X$ und $g_Y$ des auf 1 normierten Gesamtbeschleunigungsvektors $\mathbf{g} = \mathbf{g}_{GES}/|\mathbf{g}_{GES}|$ gemessen wobei $\mathbf{g}_{GES} = \mathbf{g}_{ERD} - \mathbf{a}$ und **a** der Fahrzeugbeschleunigungsvektor ist. Man erhält somit $g_{Xj}$ und $g_{Yj}$ sowie $H_{Xj}$ und $H_{Yj}$ und $H_{Zj}$. Die Länge von $\mathbf{g}_j$ beträgt $\mathbf{g}_j = (g^2_{Xj} + g^2_{Yj} + g^2_{Zj})^{1/2} = 1$

Die Komponenten von $\mathbf{g}_{ERD}/|\mathbf{g}_{ERD}|$ können mit Hilfe des Nickwinkels $\alpha$ und des Rollwinkels $\beta$ ausgedrückt werden:

$$\frac{\mathbf{g}_{ERD}}{|\mathbf{g}_{ERD}|} = \begin{pmatrix} -\sin(\alpha) \\ \cos(\alpha) \cdot \sin(\beta) \\ \cos(\alpha) \cdot \cos(\beta) \end{pmatrix}$$

b) Die zeitliche Änderung der Komponenten $g_X$ und $g_Y$ des Gesamtbeschleunigungsvektors g wird als Differenz der Werte zu den Zeiten j und j-1 bestimmt.

c) Für die zeitliche Änderung eines Vektors, der hier als der Erdmagnetfeldvektor H angenommen wird, der einer Drehung mit der momentanen Drehgeschwindigkeit $\omega$ unterworfen ist, gilt:

$$dH/dt = \dot{H} = \omega \times H$$

d) Wird in dem Koordinatensystem XYZ eine Drehung um die Y-Achse allein angenommen, so sind die Komponenten von H zu den Zeitpunkten j und j-1, nämlich $H_j$ und $H_{j-1}$ in der X-Z-Ebene zu berücksichtigen, nämlich $H_{Xj}$, $H_{Zj}$, $H_{Xj-1}$ und $H_{Zj-1}$, und man erhält die folgende Formel für die Drehrate um die Y-Achse:

$$\omega_{Yj} \cdot \Delta t = \frac{H_{Zj-1} \cdot H_{Xj} - H_{Xj-1} \cdot H_{Zj}}{(H^{mit}_{Xj})^2 + (H^{mit}_{Zj})^2}$$

mit den Mittelwerten $H^{mit}_{Xj}$ und $H^{mit}_{Zj}$ gemäß

$$H^{mit}_{Xj} = \left(H_{Xj-1} + H_{Xj}\right)/2 \quad und \quad H^{mit}_{Zj} = \left(H_{Zj-1} + H_{Zj}\right)/2$$

e) Wird eine Drehung um die X-Achse allein angenommen, so ergibt sich analog wie bei der obigen Drehung um die Y-Achse die folgende Formel für die Drehrate um die X-Achse:

$$\omega_{Xj} \cdot \Delta t = \frac{H_{Yj-1} \cdot H_{Zj} - H_{Zj-1} \cdot H_{Yj}}{(H^{mit}_{Yj})^2 + (H^{mit}_{Zj})^2}$$

mit den Mittelwerten $H^{mit}_{Yj}$ und $H^{mit}_{Zj}$ gemäß

$$H^{mit}_{Yj} = \left(H_{Yj-1} + H_{Yj}\right)/2 \quad und \quad H^{mit}_{Zj} = \left(H_{Zj-1} + H_{Zj}\right)/2$$

f) Es werden nun Gütefunktionen für die Änderung des gemessenen Horizontes auf der Basis der zeitlichen Änderung der Komponenten des Gesamtbeschleunigungsvektors g bestimmt. Als solche können verwendet werden:

$$Q_{Xj}^g = f \cdot (g_{Xj} - g_{Xj-1})^2 \quad \text{und} \quad Q_{Yj}^g = f \cdot (g_{Yj} - g_{Yj-1})^2$$

Der Faktor f dient der Optimierung des Verfahrens. In der Praxis hat sich f = 5 als günstiger Wert ergeben.

g) Als Gütefunktionen für erlaubte Änderungen des gemessenen Horizontes werden die gemessenen Drehwinkel des Magnetfeldvektors H verwendet:

$$Q_{Xj}^H = (\omega_{Yj} \cdot \Delta t)^2 \qquad Q_{Yj}^H = (\omega_{Xj} \cdot \Delta t)^2$$

h) Als Funktionen der Gütefunktionen ergeben sich Gewichtsfaktoren $G_{Xj}$ für $g_X$ und $G_{Yj}$ für $g_Y$ gemäß

$$G_{Xj} = \frac{Q_{Xj}^H}{Q_{Xj}^H + Q_{Xj}^g} \quad \text{und} \quad G_{Yj} = \frac{Q_{Yj}^H}{Q_{Yj}^H + Q_{Yj}^g}$$

i) Die stabilisierten Größen ergeben sich dann mit Hilfe der Gewichtsfaktoren aus der Beziehung

$$g_{Xj}^{stab} = g_{Xj-1}^{stab} + G_{Xj} \cdot (g_{Xj} - g_{Xj-1}^{stab})$$

$$g_{Yj}^{stab} = g_{Yj-1}^{stab} + G_{Yj} \cdot (g_{Yj} - g_{Yj-1}^{stab})$$

Die Gütefunktion wird ersichtlich Null, wenn die Drehwinkelkomponente Null wird. Das ist der Fall, wenn die entsprechende Magnetfeldkomponente zur Zeit j gleich der Komponente zur Zeit j-1 ist, d.h. bei reinen Linearbeschleunigungen. Dann wird aber auch der Gewichtsfaktor Null und es wird die stabilisierte g-Komponente zur Zeit j gleich der stabilisierten g-Komponente zur Zeit j-1.

Entsprechend dem beschriebenen Verfahren können die vorstehend angegebenen stabiliserten Größen dazu verwendet werden, nach einer geeigneten Umwandlung als Eingangsgrößen einer Steuereinrichtung für eine Anzeigeeinrichtung zugeführt zu werden.

Die genannten Eingangssignale können auch einer Steuereinrichtung zugeführt werden, die nicht für eine Anzeigeeinrichtung sondem beispielsweise zur Steuerung einer mechanischen Größe dient.

Es war darauf hingewiesen worden, daß die gesamte Drehmatrix nicht aus nur zwei Messungen des Magnetfeldvektors erhalten werden kann. Deshalb kann ein Übersprechen der einzelnen Drehrichtungen auftreten. Im Falle einer linearen Beschleunigung, kann jedoch eine fast vollständige Entstörung erreicht werden, da in diesem Fall keine Drehung und somit auch kein Übersprechen der verschiedenen Drehrichtungen auftritt.

Auch im Falle auftretender Drehungen wird man im statistischen Mittel bei den bereits erwähnten Annahmen häufiger eine richtige als eine falsche Abschätzung erhalten, so daß eine Verbesserung des Endergebnisse bei Navigationsrechnungen erhalten wird. Diese Überlegungen wurden durch Versuchsfahrten von mit diesbezüglichen Magnetkompassen ausgerüsteten Fahrzeugen in der Praxis bestätigt, wobei sich eine Verbesserung von mehr als einem Faktor 2 der Navigationsergebnisse erreichen ließ.

Das angegebene Verfahren könnte ergänzt werden, indem ein zusätzlicher, echter Kreisel eingeführt würde. Die trüge jedoch zu den Kosten des Kompasses bei. Man würde zwei Kreiselkompasse mit nichtparallelen Achsen benötigen, um niemals in die singuläre Situation zu kommen, daß die verfügbaren Kreiselachsen mit der Erdfeldrichtung zusammenfallen.

Das beschriebene Verfahren könnte durch die Verwendung von Kalman-Filterformen weitergebildet werden.

Es wird noch darauf hingewiesen, daß die Berechnung einer Gütefunktion in vielfältiger Weise erfolgen kann, wie durch

1) Verwendung von Kalmanfiltem;

2) Verwendung von Maximum Likelihood Operatoren;

3) Anpassen einer empirisch ermittelten Verteilung;

4) Verwendung von Neuronalen Netzen;

5) Verwendung von Fuzzy Logik;

6) Verwendung von regelbasierten Systemen;

7) Verwendung von anderen Expertensystemen.

## ANHANG

Ableitung der Transformationsgleichungen unter Näherung der Drehratenkomponenten.

Es wird der Fall der reinen Drehung um die Y-Achse betrachtet, d.h. reine Veränderung des Nickwinkels $\alpha$.

In der XZ-Ebene sei zu einem Zeitpunkt $t_{j-1}$ die Magnetfeldvektorkomponente $H_{j-1} = (H_{Zj-1}, H_{Xj-1})$ und zu einem späteren Zeitpunkt $t_j$ die gedrehte Komponente $H_j = (H_{Zj}, H_{Xj})$ vorhanden.

Für die zeitliche Änderung eines Vektors $\mathbf{H}$, der einer Drehung mit der momentanen Drehgeschwindigkeit $\omega$ unterworfen ist, gilt:

$$dH/dt = \dot{H} = \omega \times H$$

Nimmt man nun an, daß $\omega$ nur eine Y-Komponente $\omega_Y$ aufweist, so ergibt sich aus der obigen Gleichung:

$$\dot{H}_X = \omega_Y \cdot H_Z \qquad \dot{H}_Z = -\omega_Y \cdot H_X$$

Durch Multiplikation mit $H_Z$ und $H_X$ und Subtraktion folgt:

$$\omega_Y = \frac{H_Z \cdot \dot{H}_X - H_X \cdot \dot{H}_Z}{H_X^2 + H_Z^2}$$

Entsprechend ergibt sich für $\omega_X$

$$\dot{H}_Y = -\omega_X \cdot H_Z \qquad \dot{H}_Z = \omega_X \cdot H_Y$$

$$\omega_X = \frac{H_Y \cdot \dot{H}_Z - H_Z \cdot \dot{H}_Y}{H_Y^2 + H_Z^2}$$

Grundsätzlich läßt sich zeigen, daß diese Formeln im Sinne der kleinsten Quadrate statistisch optimal sind.

Für diskrete Vektoren, die um die Zeitspanne $\Delta t = t_j - t_{j-1}$ auseinander liegen, müssen diese Gleichungen entsprechend angepaßt werden.

Ein mögliches Diskretisierungs-Schema wäre mit den Mittelwerten

$$H_{Xj}^{mit} = (H_{Xj} + H_{Xj-1})/2$$

$$H_{Yj}^{mit} = (H_{Yj} + H_{Yj-1})/2$$

$$H_{Zj}^{mit} = (H_{Zj} + H_{Zj-1})/2$$

$$\omega_{Yj} \cdot \Delta t = \frac{H_{Zj}^{mit} \cdot (H_{Xj} + H_{Xj-1}) - H_{Xj}^{mit} \cdot (H_{Zj} + H_{Zj-1})}{(H_{Xj}^{mit})^2 + (H_{Zj}^{mit})^2}$$

$$= \frac{H_{Zj-1} \cdot H_{Xj} - H_{Xj-1} \cdot H_{Zj}}{(H_{Xj}^{mit})^2 + (H_{Zj}^{mit})^2}$$

$$\omega_{Xj} \cdot \Delta t = \frac{H_{Yj}^{mit} \cdot (H_{Zj} - H_{Zj-1}) - H_{Zj}^{mit} \cdot (H_{Yj} - H_{Yj-1})}{(H_{Yj}^{mit})^2 + (H_{Zj}^{mit})^2}$$

$$= \frac{H_{Yj-1} \cdot H_{Zj} - H_{Zj-1} \cdot H_{Yj}}{(H_{Yj}^{mit})^2 + (H_{Zj}^{mit})^2}$$

Dabei bezeichnen $\omega_{Yj} \cdot \Delta t$ und $\omega_{Xj} \cdot \Delta t$ die berechneten Drehwinkel zwischen den Zeitpunkten $t_{j-1}$ und $t_j$ mit $\Delta t = t_j - t_{j-1}$.

**Patentansprüche**

1. Verfahren zur Horizontstabilisierung von Magnetkompassen, wobei

a) zu den Zeiten $t_{j-1}$ und $t_j$ mit j = 1, 2,..., n in einem kartesischen Koordinatensystem mit den Achsen X, Y und Z die Komponenten $H_X$, $H_Y$ und $H_Z$ des Feldvektors **H** des Erdmagnetfeldes und die Komponenten $g_X$ und $g_Y$ des Vektors **g**$_{GES}$ der Gesamtbeschleunigung $g_{GES}$ gemessen werden, der sich aus dem Erdbeschleunigungsvektor und dem FahrzeuglKompaßbeschleunigungsvektor zusammensetzt, wobei der Erdbeschleunigungsvektor von dem Ursprung des XYZ-Koordinatensystems ausgeht und bei horizontal ausgerichtetem Magnetkompaß mit der Z-Achse zusammenfällt und die X-Achse die Sichtlinie bildet,

b) die zeitlichen Änderungen der Komponenten $g_X$ und $g_Y$ des Gesamtbeschleunigungsvektors **g**$_{GES}$ bestimmt werden,

c) die zeitlichen Änderungen der Komponenten $H_X$, $H_Y$, $H_Z$ des Magnetfeldvekors H bestimmt werden,

d) aus den bei den Schritten a), b) und c) berechneten Größen die Drehratenkomponenten des Vektorfeldes bestimmt werden, durch die an einem bestimmten Ort die Beziehung zwischen der Raumlage des horizontal ausgerichteten Magnetkompasses und dem gegenwärtig gekippten Magnetkompaß definiert ist,

e) aus der Y-Meridian-Komponente der berechneten Drehratenkomponenten ein Nickterm bestimmt wird,

f) aus der X-Meridian-Komponente der berechneten Drehratenkomponenten ein Rollterm bestimmt wird,

g) unter der Annahme, daß die Drehungen vorwiegend einzeln als Nickwinkel-Änderung um die Y-Achse und als Rollwinkel-Änderung um die X-Achse stattfinden, eine angenäherte Gütefunktion für die Änderung des Horizonts bestimmt wird, nämlich

$g_1$) eine erste Gütefunktion für den gemessenen Horizont auf der Grundlage der unter c) bestimmten Größen und

$g_2$) eine zweite Gütefunktion für den zu ermittelnden, stabilisierten Horizont auf der Grundlage der unter e) und f) bestimmten Größen,

h) auf der Grundlage der ersten und der zweiten Gütefunktion ein Schätzverfahren vorgenommen wird, durch das das Zutreffen des zu ermittelnden, stabilisierten Horizonts des Systems beurteilt wird,

i) mit Hilfe des Schätzverfahrens die gemessenen und/oder geschätzten Komponenten des Gesamtbeschleunigungsvektors gewichtet werden, wodurch ein stabilisierter Horizont erzeugt wird, der weitgehend unanfällig gegen bewegungsbedingte Beschleunigungen ist, aber dennoch für Lageänderungen des Systems empfindlich ist.

2. Verfahren zur Horizontstabilisierung von Magnetkompassen, wobei

a) zu den Zeiten $t_{j-1}$ und $t_j$, mit j = 1,.., n, in einem kartesischen Koordinatensystem mit den Achsen X, Y und Z die Komponenten $H_X$, $H_Y$ und $H_Z$ des Feldvektors H des Erdmagneffeldes und die Komponenten $g_X$ und $g_Y$ des auf 1 normierten Vektors g = $\mathbf{g}_{GES}/|\mathbf{g}_{GES}|$ der Gesamtbeschleunigung $\mathbf{g}_{GES}$ gemessen werden, der sich aus dem Erdbeschleunigungsvektor $\mathbf{g}_{ERD}$ und dem Fahrzeug/Kompaßbeschleunigungsvektor a zusammensetzt, wobei der Erdbeschleunigungsvektor von dem Ursprung des XYZ-Koordinatensystems ausgeht und bei horizontal ausgerichtetem Magnetkompaß mit der Z-Achse zusammenfällt und die X-Achse die Sichtlinie bildet, so daß die Größen $g_{Xj}$ und $g_{Yj}$ und $H_{Xj}$, $H_{Yj}$ und $H_{Zj}$ erhalten werden, und die Komponenten von $\mathbf{g}$ mit Hilfe des Nickwinkels $\alpha$ und des Rollwinkels $\beta$ ausgedrückt werden als:

$$\frac{\mathbf{g}_{ERD}}{|\mathbf{g}_{ERD}|} = \begin{pmatrix} -\sin(\alpha) \\ \cos(\alpha)\sin(\beta) \\ \cos(\alpha)\cos(\beta) \end{pmatrix}$$

b) die zeitlichen Änderungen der Komponenten $g_X$ und $g_Y$ des Gesamtbeschleunigungsvektors $\mathbf{g}$ bestimmt werden,

c) die zeitlichen Änderungen der Komponenten $H_X$, $H_Y$, $H_Z$ des Magnetfeldvekors $\mathbf{H}$, und seines Absolutwertes $|\mathbf{H}|$ bestimmt werden,

d) in dem XYZ-Koordinatensystem eine Drehung um die Y-Achse allein angenommen wird und unter Berücksichtigung der Komponenten von $\mathbf{H}$ zu den Zeitpunkten j und j-1, nämlich $H_j$ und $H_{j-1}$, in derX-Z-Ebene, nämlich $H_{Xj}$, $H_{Yj}$, $H_{Xj-1}$ und $H_{Zj-1}$, die Drehrate $\omega_{Yj}\cdot\Delta t$ um die Y-Achse bestimmt wird:

$$\omega_{Yj}\cdot\Delta t = \frac{H_{Zj-1}\cdot H_{Xj} - H_{Xj-1}\cdot H_{Zj}}{\left(H_{Xj}^{mit}\right)^2 + \left(H_{Xj}^{mit}\right)^2}$$

mit den Mittelwerten $H_{Xj}^{mit}$ und $H_{Zj}^{mit}$ gemäß

$$H_{Xj}^{mit} = (H_{Xj-1} + H_{Xj})/2 \quad und \quad H_{Zj}^{mit} = (H_{Zj-1} + H_{Zj})/2$$

e) in dem XYZ-Koordinatensystem eine Drehung um die X-Achse allein angenommen wird und unter Berücksichtigung der Komponenten von $\mathbf{H}$ zu den Zeitpunkten j und j-1, nämlich $H_j$ und $H_{j-1}$, in der Y-Z-Ebene, nämlich $H_{Xj}$, $H_{Yj}$, $H_{Xj-1}$ und $H_{Yj-1}$, die Drehrate $\omega_{Xj}\cdot\Delta t$ um die X-Achse bestimmt wird:

$$\omega_{Xj}\cdot\Delta t = \frac{H_{Yj-1}\cdot H_{Zj} - H_{Zj-1}\cdot H_{Yj}}{\left(H_{Yj}^{mit}\right)^2 + \left(H_{Zj}^{mit}\right)^2}$$

mit den Mittelwerten $H_{Yj}^{mit}$ und $H_{Zj}^{mit}$ gemäß

$$H_{Yj}^{mit} = (H_{Yj-1} + H_{Yj}/2 \quad und \quad H_{Zj}^{mit} = (H_{Zj-1} + H_{Zj})/2$$

f) daß Gütefunktionen für die Änderung des gemessenen Horizontes auf der Basis der zeitlichen Änderung der Komponenten des Gesamtbeschleunigungsvektors $\mathbf{g}$ bestimmt werden gemäß:

$$Q_{Xj}^g = f\cdot(g_{Xj} - g_{Xj-1})^2 \quad und \quad Q_{Yj}^g = f\cdot(g_{Yj} - g_{Yj-1})^2$$

mit einem Zahlenfaktor f,

g) daß Gütefunktionen für erlaubte Änderungen des gemessenen Horizontes unter Verwendung der Drehwinkel des Magnetfeldvektors **H** bestimmt werden gemäß:

$$Q_{Xj}^{H} = (\omega_{Yj} \cdot \Delta t)^2 \quad \text{und} \quad Q_{Yj}^{H} = (\omega_{Xj} \cdot \Delta t)^2$$

h) daß Gewichtsfaktoren $G_{Xj}$ für $g_X$ und $G_{Yj}$ für $g_Y$ als Funktionen der unter f) und g) bestimmten Gütefunktionen bestimmt werden gemäß:

$$G_{Xj} = \frac{Q_{Xj}^{H}}{Q_{Xj}^{H} + Q_{Xj}^{g}} \quad \text{und } G_{Yj} = \frac{Q_{Yj}^{H}}{Q_{Yj}^{H} + Q_{Yj}^{g}}$$

i) und daß sich die stabilisierten Größen dann mit Hilfe der Gewichtsfaktoren aus der Beziehung

$$g_{Xj}^{stab} = g_{Xj-1}^{stab} + G_{Xj} \cdot (g_{Xj} - g_{Xj-1}^{stab})$$

$$g_{Yj}^{stab} = g_{Yj-1}^{stab} + G_{Yj} \cdot (g_{Yj} - g_{Yj-1}^{stab})$$

ergeben.

3. Verfahren nach Anspruch 1, **dadurch gekennzeichnet, daß** normierte Komponenten des gemessenen Gesamtbeschleunigungsvektors verwendet werden, die die Gleichung $g_X^2 + g_Y^2 + g_Z^2 = 1$ erfüllen.

4. Verfahren nach Anspruch 1, **dadurch gekennzeichnet, daß** der Faktor f einen Wert zwischen 3 und 8, bevorzugt zwischen 5 und 6, hat.

**Claims**

1. Method of stabilizing the horizon of magnetic compasses, in which

a) the components $H_X$, $H_Y$ and $H_Z$ of the field vector **H** of the Earth's magnetic field and the components $g_X$ and $g_Y$ of the vector **g<sub>TOT</sub>** of the total acceleration **g<sub>TOT</sub>**, which vector is composed of the gravitational acceleration vector and the vehicle/compass acceleration vector, are measured at the times $t_{j-1}$ and $t_j$, where j = 1, 2, ..., n in a Cartesian coordinate system having the axes X, Y and Z, the gravitational acceleration vector starting from the origin of the XYZ coordinate system and, in the case of a horizontally aligned magnetic compass, coinciding with the Z axis and the X axis forming the line of sight,
b) the changes of the components $g_X$ and $g_Y$ of the total acceleration vector **g<sub>TOT</sub>** as a function of time are determined,
c) the changes of the components $H_X$, $H_Y$ and $H_Z$ of the magnetic field vector **H** as a function of time are determined,
d) the rotational rate components of the vector field which define the relationship between the spatial position of the horizontally aligned magnetic compass and the currently tilted magnetic compass at a specific location are determined from the quantities calculated in steps a), b) and c),
e) a pitch term is determined from the Y meridian component of the calculated rotational rate components,
f) a roll term is determined from the X meridian component of the calculated rotational rate components,
g) an approximate quality function for the change of the horizon is determined assuming that the rotations take place predominantly individually as a change of pitch angle about the Y axis and as a change of roll angle about the X axis, namely
g₁) a first quality function for the measured horizon on the basis of the quantities determined under c) and
g₂) a second quality function for the stabilized horizon to be determined, on the basis of the quantities determined under e) and f),
h) an estimation procedure, by means of which the applicability of the stabilized system horizon to be determined is assessed, is carried out on the basis of the first and the second quality functions,

i) the measured and/or estimated components of the total acceleration vector are weighted with the aid of the estimation procedure, producing a stabilized horizon which is substantially unsusceptible to movement-related accelerations but is nevertheless sensitive to changes in the position of the system.

2. Method of stabilizing the horizon of magnetic compasses, in which

a) the components $H_X$, $H_Y$ and $H_Z$ of the field vector **H** of the Earth's magnetic field and the components $g_X$ and $g_Y$ of the vector normalized to 1, $\mathbf{g} = \mathbf{g}_{TOT}/|\mathbf{g}_{TOT}|$, of the total acceleration $\mathbf{g}_{TOT}$, which vector is composed of the gravitational acceleration vector $\mathbf{g}_{EARTH}$ and the vehicle/compass acceleration vector **a,** are measured at the times $t_{j-1}$ and $t_j$, where j = 1, .., n, in a Cartesian coordinate system having the axes X, Y and Z, the gravitational acceleration vector starting from the origin of the XYZ coordinate system and, in the case of a horizontally aligned magnetic compass, coinciding with the Z axis and the X axis forming the line of sight so that the quantities $g_{Xj}$ and $g_{Yj}$ and $H_{Xj}$, $H_{Yj}$ and $H_{Zj}$ are obtained, and the components of **g** are expressed with the aid of the pitch angle $\alpha$ and of the roll angle $\beta$ as:

$$\frac{\mathbf{g}_{EARTH}}{|\mathbf{g}_{EARTH}|} = \begin{pmatrix} -\sin(\alpha) \\ \cos(\alpha)\sin(\beta) \\ \cos(\alpha)\cos(\beta) \end{pmatrix}$$

b) the changes of the components $g_X$ and $g_Y$ of the total acceleration vector **g** as a function of time are determined,

c) the changes of the components $H_X$, $H_Y$ and $H_Z$ of the magnetic field vector **H** and its absolute value |**H**| as a function of time are determined,

d) in the XYZ coordinate system a rotation about the Y axis alone is assumed and, taking into account the components of **H** at the times j and j-1, namely $H_j$ and $H_{j-1}$, in the X-Z plane, namely $H_{Xj}$, $H_{Yj}$, $H_{Xj-1}$ and $H_{Zj-1}$, the rotational rate $\omega_{Yj} \cdot \Delta t$ about the Y axis is determined:

$$\omega_{Yj} \cdot \Delta t = \frac{H_{Zj-1} \cdot H_{Xj} - H_{Xj-1} \cdot H_{Zj}}{(H_{Xj}^{mean})^2 + (H_{Zj}^{mean})^2}$$

with the mean values $(H_{Xj}^{mean})$ and $(H_{Zj}^{mean})$ according to

$$(H_{Xj}^{mean}) = (H_{Xj-1} + H_{Xj})/2 \quad \text{and} \quad (H_{Zj}^{mean}) = (H_{Zj-1} + H_{Zj})/2$$

e) in the XYZ coordinate system a rotation about the X axis alone is assumed and, taking into account the components of **H** at the times j and j-1, namely $H_j$ and $H_{j-1}$, in the Y-Z plane, namely $H_{Xj}$, $H_{Yj}$, $H_{Xj-1}$ and $H_{Yj-1}$, the rotational rate $\omega_{Xj} \cdot \Delta t$ about the X axis is determined:

$$\omega_{Xj} \cdot \Delta t = \frac{H_{Yj-1} \cdot H_{Zj} - H_{Zj-1} \cdot H_{Yj}}{(H_{Yj}^{mean})^2 + (H_{Zj}^{mean})^2}$$

with the mean values $(H_{Yj}^{mean})$ and $(H_{Zj}^{mean})$ according to

$$(H_{Yj}^{mean}) = (H_{Yj-1} + H_{Yj})/2 \quad \text{and} \quad (H_{Zj}^{mean}) = (H_{Zj-1} + H_{Zj})/2$$

f) quality functions for the change of the measured horizon on the basis of the change of the components of the total acceleration vector **g** as a function of time are determined according to:

$$Q^g_{Xj} = f \cdot (g_{Xj}\text{-}g_{Xj\text{-}1})^2 \quad \text{and} \quad Q^g_{Yj} = f \cdot (g_{Yj}\text{-}g_{Yj\text{-}1})^2$$

with a numerical factor f,

g) quality functions for allowed changes of the measured horizon using the angle of rotation of the magnetic field vector **H** are determined according to:

$$Q^H_{Xj} = (\omega_{Yj}\cdot\Delta t)^2 \text{ and } Q^H_{Yj} = (\omega_{Xj}\cdot\Delta t)^2$$

h) weight factors $G_{Xj}$ for $g_X$ and $G_{Yj}$ for $g_Y$ as functions of the quality functions determined under f) and g) are determined according to:

$$G_{Xj} = \frac{Q^H_{Xj}}{Q^H_{Xj} + Q^g_{Xj}} \text{ and } G_{Yj} = \frac{Q^H_{Yj}}{Q^H_{Yj} + Q^g_{Yj}}$$

i) and the weight factors are then used to obtain the stabilized quantities from the relationship

$$g^{stab}_{Xj} = g^{stab}_{Xj\text{-}1} + G_{Xj}\cdot(g_{Xj}\text{-}g^{stab}_{Xj\text{-}1})$$

$$g^{stab}_{Yj} = g^{stab}_{Yj\text{-}1} + G_{Yj}\cdot(g_{Yj}\text{-}g^{stab}_{Yj\text{-}1}).$$

3. Method according to Claim 1, **characterized in that** normalized components of the measured total acceleration vector which fulfil the equation $g_x{}^2+g_y{}^2+g_z{}^2=1$ are used.

4. Method according to Claim 1, **characterized in that** the factor f has a value between 3 and 8, preferably between 5 and 6.


**Revendications**

1. Procédé de stabilisation de l'horizon de compas magnétiques, où

a) aux moments $t_{j\text{-}1}$ et $t_1$ avec j = 1,2,..., n dans un système de coordonnées cartésiennes, avec les axes X, Y et Z, les composantes $H_X$, $H_Y$ et $H_Z$ du facteur de champ H du champ magnétique terrestre et les composantes $g_x$ et $g_y$ du vecteur $g_{GES}$ de l'accélération globale $g_{GES}$ sont mesurées, qui se composent du vecteur d'accélération terrestre et du vecteur d'accélération véhicule compas, où le facteur d'accélération terrestre part de l'origine du système de coordonnées en XYZ et, dans le cas où le compas magnétique est orienté horizontalement, coïncide avec l'axe Z et l'axe X forme la ligne de visée,

b) les modifications temporelles des composantes $g_x$ et $g_y$ du vecteur de l'accélération globale $g_{GES}$ sont déterminées,

c) les variations temporelles des composantes $H_X$, $H_Y$, $H_Z$ du vecteur de champ magnétique sont déterminées,

d) à partir des grandeurs calculées aux étapes a), b) et c), les composantes de vitesse de rotation du vecteur de champ sont déterminées, aux moyens desquelles, en un site déterminé, la relation entre la position dans l'espace du compas magnétique orienté horizontalement et le compas magnétique basculé à l'instant présent est définie,

e) un terme de tangage est déterminé à partir de la composante de méridienne Y des composantes de vitesse de rotation calculées,

f) un terme de roulis est déterminé à partir de la composante de méridienne X des composantes de vitesse de rotation calculées,

g) dans l'hypothèse selon laquelle les rotations se produisent majoritairement en tant que variation de l'angle de tangage autour de l'axe Y et de variation de l'angle de roulis autour de l'axe X, une fonction de qualité approchée de la modification de l'horizon est déterminée, précisément

$g_1$) une première fonction de qualité pour l'horizon mesuré, d'après des grandeurs déterminées au paragraphe c), et

g₂) une deuxième fonction de qualité pour l'horizon stabilisé à déterminer, d'après des grandeurs déterminées aux paragraphes e) et f)

h) d'après la première et la deuxième fonction de qualité est effectué un processus d'estimation, au moyen duquel la justesse de l'horizon stabilisé à déterminer du système est apprécié,

i) à l'aide du processus d'estimation, on pondère les composantes mesurées et/ou estimées du facteur d'estimation globale, faisant qu'on génère un horizon stabilisé qui est notablement insensible aux accélérations provenant du déplacement, mais est encore sensible aux variations de position du système.

2. Procédé de stabilisation de compas magnétiques, où

a) aux instants $t_{j-1}$ et $t_1$ avec j = 1,..., n, dans un système de coordonnées cartésiennes, avec les axes X, Y et Z, on mesure les composantes $H_X$, $H_Y$ et $H_Z$ du facteur de champ H du champ magnétique terrestre et des composantes $g_x$ et $g_y$ du vecteur, normé à 1, $g = g_{GES}/|g_{GES}|$ de l'accélération globale $g_{GES}$, qui se compose du vecteur de l'accélération terrestre $g_{ERD}$ et du vecteur d'accélération véhicule/compas, $\underline{a}$, le facteur d'accélération terrestre partant de l'origine du système de coordonnées en XYZ et, dans le cas où le compas magnétique est orienté horizontalement, coïncide avec l'axe Z, et l'axe X forme la ligne de visée, de sorte que les grandeurs $g_{Xj}$ et $g_{Yj}$ et $H_{Xj}$, $H_{Yj}$ et $H_{Zj}$ et les composantes de g sont exprimées à l'aide de l'angle de tangage $\alpha$ et de l'angle de roulis $\beta$ sous la forme :

$$\frac{g_{ERD}}{|g_{ERD}|} = \begin{pmatrix} -\sin(\alpha) \\ \cos(\alpha)\sin(\beta) \\ \cos(\alpha)\cos(\beta) \end{pmatrix}$$

b) les variations temporelles des composantes $g_X$ et $g_Y$ du vecteur d'accélération globale sont déterminées,

c) les variations temporelles des composantes $H_X$, $H_Y$, Hz du vecteur magnétique H et de sa valeur absolue (H| sont déterminées,

d) dans le système de coordonnées XYZ, on suppose une rotation autour de l'axe Y seul et, en prenant en considération les composantes de H aux moments j et j-1, précisément $H_j$ et $H_{j-1}$ dans le plan X-Z, précisément $H_{Xj}$, $H_{Yj-1}$ et $H_{Zj-1}$, la vitesse de rotation $\omega_{Yj} \Delta t$ au cours de l'axe Y est déterminée :

$$\omega_{Yj} \cdot \Delta t = \frac{H_{Zj-1} \cdot H_{Xj} - H_{Xj-1} \cdot H_{Zj}}{(H_{Xj}^{mit})^2 + (H_{Zj}^{mit})^2}$$

avec les valeurs moyennes $H_{Xj}^{mit}$ et $H_{Zj}^{mit}$ selon

$$H_{Xj}^{mit} = (H_{Xj-1} + H_{Xj})/2 \text{ et } H_{Zj}^{mit} = (H_{Zj-1} + H_{Zj})/2$$

e) dans le système de coordonnées XYZ, on suppose une rotation autour de l'axe X seul et, en prenant en considération les composantes de H aux moments j et j-1, précisément $H_j$ et $H_{j-1}$ dans le plan Y-Z, précisément $H_{Xj}$, $H_{Yj-1}$ et $H_{Zj-1}$, la vitesse de rotation $\omega_{Xj} \Delta t$ au cours de l'axe Y est déterminée :

$$\omega_{Xj} \cdot \Delta t = \frac{H_{Yj-1} \cdot H_{Zj} - H_{Zj-1} \cdot H_{Yj}}{(H_{Yj}^{mit})^2 + (H_{Zj}^{mit})^2}$$

avec les valeurs moyennes $H_{Yj}^{mit}$ et $H_{Zj}^{mit}$ selon

$$H_{Yj}^{mit} = (H_{Yj-1} + H_{Yj})/2 \text{ et } H_{Zj}^{mit} = (H_{Zj-1} + H_{Zj})/2$$

f) en ce que des fonctions de qualité pour la modification de l'horizon mesuré sont déterminées d'après la variation temporelle des composantes du vecteur d'accélération globale g, selon:

$$Q_{Xj}^{g} = f \cdot (g_{Xj} - g_{Xj-1})^2 \text{ et } Q_{Yj}^{g} = f \cdot (g_{Yj} - g_{Yj-1})^2$$

avec un facteur numérique f,

g) en ce que des fonctions de qualité pour des variations autorisées de l'horizon mesuré sont déterminées en utilisant l'angle de rotation du vecteur de champ magnétique H, selon

$$Q_{Xj}^{H} = (\omega_{Yj} \cdot \Delta t)^2 \text{ et } Q_{Yj}^{H} = (\omega_{Yj} \cdot \Delta t)^2$$

h) en ce que des facteurs de poids $G_{Xj}$ pour $g_X$ et $G_{Yj}$ pour $g_Y$ sont déterminés en tant que fonctions des fonctions de qualité déterminées sous f) et g), selon :

$$G_{Xj} = \frac{Q_{Xj}^{H}}{Q_{Xj}^{H} + Q_{Xj}^{g}} \text{ et } G_{Yj} = \frac{Q_{Yj}^{H}}{Q_{Yj}^{H} + Q_{Yj}^{g}}$$

i) et en ce que les grandeurs stabilisées sont obtenues ensuite à l'aide des facteurs de pondération, d'après la relation

$$g_{Xj}^{stab} = g_{Xj-1}^{stab} + G_{Xj} \cdot (g_{Xj} - g_{Xj-1}^{stab})$$

$$g_{Yj}^{stab} = g_{Yj-1}^{stab} + G_{Yj} \cdot (g_{Yj} - g_{Yj-1}^{stab})$$

3. Procédé selon la revendication 1, **caractérisé en ce que** des composants normés du vecteur d'accélération globale mesurée sont utilisés, satisfaisant à l'égalité $g_x^2 + g_Y^2 + G_Z^2 = 1$.

4. Procédé selon la revendication 1, **caractérisé en ce que** le facteur f a une valeur comprise entre 3 et 8, de préférence entre 5 et 6.